# EUROPEAN PATENT APPLICATION

(11) **EP 4 751 946 A1**
(43) Date of publication of application: **03.06.2026**
(21) Application number: 23946662.6
(22) Date of filing: 25.07.2023
(51) Int. Cl.: B60G 17/015, B60G 17/019, B60G 17/02, B60W 30/12

(54) **VEHICLE ATTITUDE CONTROL METHOD AND VEHICLE ATTITUDE CONTROL DEVICE**

(71) Applicant: Nissan Motor Co., Ltd., Yokohama-shi, Kanagawa 221-0023 (JP)
(72) Inventor: TAKEDA, Fuminori, Atsugi-shi, Kanagawa 243-0123 (JP); HAYAKAWA, Yasuhisa, Atsugi-shi, Kanagawa 243-0123 (JP)
(74) Representative: Grünecker Patent- und Rechtsanwälte PartG mbB
(86) International application number: PCT/JP2023/027238
(87) International publication number: WO 2025/022579

(57) **Abstract**

A vehicle attitude control device (10), when a vehicle (2) is traveling while executing lane keeping control based on detected information of an in-vehicle sensor (30), determines whether a traveling condition is a condition where the in-vehicle sensor (30) executes calibration or not and a condition that affects the calibration of the in-vehicle sensor (30) or not based on traveling condition information including the traveling condition of the vehicle (2), and when the traveling condition is determined to be the condition where the in-vehicle sensor (30) executes the calibration and the condition that affects the calibration, suppresses an attitude change of the vehicle (2).

## Description

### Technical Field

The present invention relates to a vehicle attitude control method and a vehicle attitude control device.

### Background Art

There have been known a vehicle height adjustment device for an air suspension vehicle that adjusts a vehicle height by increasing and decreasing an air pressure in an air cylinder or an air bag, and a technique that allows for, in a vehicle stop mode, adjustment of increasing and decreasing the air pressure by a manual operation and disables the manual operation in a traveling mode to keep the air pressure at a predetermined pressure (Patent Document 1).

### Prior Art Document

### Patent Document

Patent Document 1: JP-A-2006-248291

### Summary of Invention

### Problems to Be Solved by Invention

However, the following problem arises when the technique described in Patent Document 1 is applied while a vehicle that executes lane keeping control based on detected information of an in-vehicle sensor travels. That is, when, for example, the attitude of the vehicle is changed due to vehicle height adjustment in a situation where the in-vehicle sensor executes calibration while the vehicle is traveling on a road that affects the calibration of the in-vehicle sensor, there arises a problem of failing to appropriately execute the lane keeping control because the accuracy of the calibration of the in-vehicle sensor decreases.

A problem to be solved by the present invention is to provide a vehicle attitude control method and a vehicle attitude control device that allow for appropriate execution of lane keeping control in a situation where an in-vehicle sensor executes calibration while a vehicle is traveling in a traveling condition that affects the calibration of the in-vehicle sensor when the vehicle including a vehicle attitude adjustment mechanism capable of changing the attitude of the traveling vehicle travels while executing the lane keeping control based on detected information of the in-vehicle sensor.

### Means for Solving Problems

The present invention solves the above-described problem by, when a vehicle is traveling while executing lane keeping control based on detected information of an in-vehicle sensor, determining whether a traveling condition is a condition where the in-vehicle sensor executes calibration or not and a condition that affects the calibration of the in-vehicle sensor or not based on traveling condition information including the traveling condition of the vehicle, and when the traveling condition is determined to be the condition where the in-vehicle sensor executes the calibration and the condition that affects the calibration, suppressing a change in an attitude of the vehicle.

### Effects of Invention

The present invention allows for appropriate execution of the lane keeping control in a situation where the in-vehicle sensor executes the calibration while the vehicle is traveling in the traveling condition that affects the calibration of the in-vehicle sensor when the vehicle including a vehicle attitude adjustment mechanism capable of changing the attitude of the traveling vehicle travels while executing the lane keeping control based on the detected information of the in-vehicle sensor.

### Brief Description of Drawings

FIG. 1 is a block diagram illustrating the configuration of a vehicle attitude control device according to an embodiment.
FIG. 2 is a drawing describing an exemplary embodiment of a vehicle attitude control method according to the embodiment.
FIG. 3 is a drawing illustrating an example of a flowchart of control processing of the vehicle attitude control method executed by the vehicle attitude control device according to the embodiment.

### Mode(s) for Carrying out the Invention

The following describes an embodiment of the present invention based on the drawings. Note that the following description is made on the premise that vehicles travel on the left side of a road in a country having the law of left-hand traffic. In a country having the law of right-hand traffic, the following description shall be read by interchanging right and left since vehicles travel on the right side of a road.

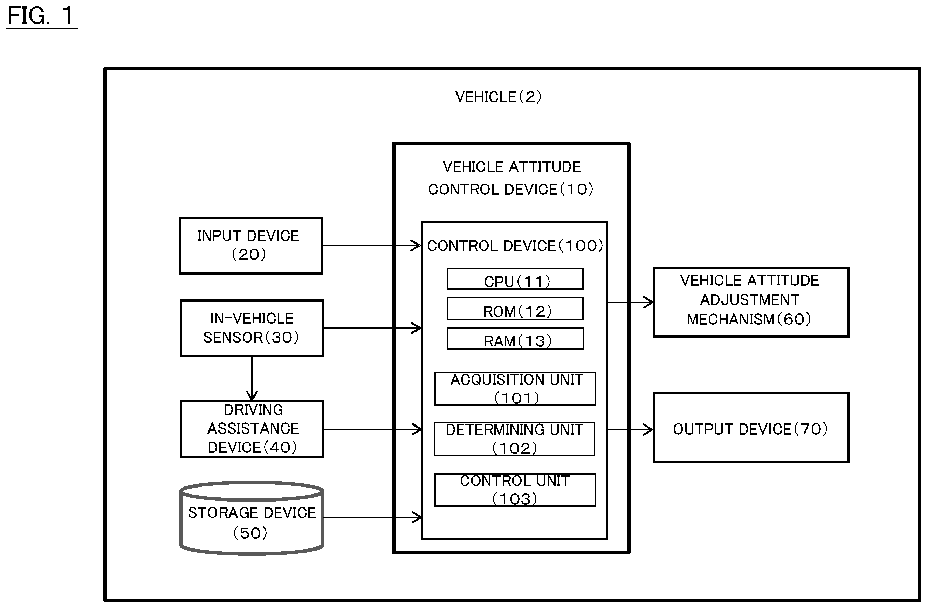

Using FIG. 1, a description will be given of a vehicle attitude control device according to an embodiment of the present invention. FIG. 1 is a block diagram illustrating the configuration of the vehicle attitude control device according to the embodiment. A vehicle 2 includes a vehicle attitude control device 10, an input device 20, an in-vehicle sensor 30, a driving assistance device 40, a storage device 50, a vehicle attitude adjustment mechanism 60, and an output device 70. These devices are connected via an in-vehicle LAN including CAN communication, and are capable of mutually transmitting and receiving information.

The vehicle 2 is exemplarily described as a vehicle including an autonomous travel control function. The vehicle 2 travels by driving operations (a steering operation, an accelerator operation, a brake operation, and the like) by a driver. The vehicle 2 travels by driving operations by the driving assistance device 40 in addition to the driver. The driving assistance device 40 is a component included in an advanced driver assistance system (ADAS) that assists driving of the vehicle 2. In this embodiment, the driving assistance device 40 executes lane keeping control of the vehicle 2 based on detected information of the in-vehicle sensor 30.

The vehicle attitude control device 10 is a device that controls the attitude of the vehicle 2 by the vehicle attitude adjustment mechanism 60. As described later, the vehicle attitude adjustment mechanism 60 includes a suspension that adjusts the attitude of the vehicle 2. The vehicle attitude control device 10 controls the attitude of the vehicle 2 by the suspension so as to suppress a change in the inclination of a vehicle body generated while the vehicle 2 travels. The vehicle attitude control device 10 adjusts the vehicle height of the vehicle 2 by the suspension. The adjustment of the vehicle height of the vehicle 2 is executed by a determination of the driver or the vehicle attitude control device 10.

In this embodiment, the vehicle attitude control device 10 acquires traveling condition information including a traveling condition of the vehicle 2 when the vehicle 2 is traveling while executing the lane keeping control, and suppresses a change in the attitude of the vehicle 2 based on the traveling condition information. In the lane keeping control, the driving assistance device 40 uses an on-board camera as the in-vehicle sensor 30 to acquire a vehicle surrounding image taking an image of a traveling environment in a traveling direction of the vehicle 2, performs an image recognition process on the vehicle surrounding image, and thus, recognizes white lines of a traffic lane in which the vehicle 2 is traveling. The driving assistance device 40 executes the lane keeping control such that the vehicle 2 travels within the traffic lane along the recognized white lines. For example, when the vehicle 2 travels on a curved road, a virtual vanishing point of the recognized white lines changes, and therefore, calibration of the on-board camera is affected. Therefore, calibration of the on-board camera is performed by taking into account the curvature of the curved road. However, when the attitude of the vehicle 2 is changed due to, for example, the adjustment of the vehicle height by the suspension or the like at this time, the change in the attitude of the vehicle 2 affects the calibration of the on-board camera. Decreased accuracy of the calibration disables the vehicle 2 from appropriately executing the lane keeping control.

As described above, when the attitude of the vehicle 2 is changed while the vehicle 2 is traveling on a road that affects the calibration of the in-vehicle sensor 30, such as a curved road, the calibration accuracy of the in-vehicle sensor 30 is decreased compared with a case where the attitude of the vehicle 2 is not changed while the vehicle 2 is traveling on the road that affects the calibration of the in-vehicle sensor 30, and therefore, the vehicle 2 may fail to appropriately execute the lane keeping control. In contrast to this, in this embodiment, when the traveling condition of the vehicle 2 is a condition where the in-vehicle sensor 30 executes the calibration and a condition where the calibration of the in-vehicle sensor 30 is affected, the vehicle attitude control device 10 suppresses the change in the attitude of the vehicle 2, and thus, the calibration accuracy of the in-vehicle sensor 30 is successfully increased, thereby allowing the vehicle 2 to appropriately execute the lane keeping control.

The vehicle attitude control device 10 includes a control device 100. The control device 100 includes a computer having hardware and software, and this computer includes a ROM 12 that stores programs, a CPU 11 that executes the programs stored in the ROM 12, and a RAM 13 that functions as an accessible storage device. The control device 100 includes an acquisition unit 101, a determining unit 102, and a control unit 103 as function blocks. The control device 100 in this embodiment executes respective functions in collaboration with the software for achieving the above-described respective functions or executing respective processes and the above-described hardware. Note that, while in this embodiment, the functions of the respective function blocks are described by dividing the functions owned by the control device 100 into three blocks, the functions of the control device 100 do not necessarily have to be divided into three blocks, and they may be divided into two or less function blocks or four or more function blocks.

The acquisition unit 101 executes an acquisition process of acquiring the traveling condition information including the traveling condition of the vehicle 2. The acquisition process is executed at a constant cycle when the vehicle 2 is traveling while executing the lane keeping control. The traveling condition information includes an operating condition of the in-vehicle sensor 30. The operating condition of the in-vehicle sensor 30 includes whether the in-vehicle sensor 30 executes the calibration or not. The acquisition unit 101 acquires the traveling condition information including the operating condition of the in-vehicle sensor 30 from the in-vehicle sensor 30. The traveling condition information includes a road condition of a road on which the vehicle 2 travels and/or an operating condition of the driving assistance device 40. The road condition includes the types of roads. The types of roads include a curved road, a rough road, a road with speed bumps, and an undulating road. The rough road is a road whose road surface is not flat but uneven. The road with speed bumps is a road having ups and downs or steps provided on the road to promote deceleration of the vehicle 2. The undulating road is a road having ups and downs like waves on the road surface. The road condition also includes the locations of diverging and merging points located on the road.

The traveling condition information may include road shape information including a gradient of the road and/or a curvature of the road. The gradient of the road includes longitudinal gradient information pertaining to gradients between respective points, which are determined based on the elevation of each point. The longitudinal gradient information is information about the gradient of a longitudinal profile in a traveling direction of the road to which each point belongs between the respective points, that is, the uphill and downhill gradients of the road. The gradient of the road also includes transverse gradient information pertaining to a gradient on a road surface in a width direction of the road. The transverse gradient information is information indicative of a magnitude of the gradient and a direction of the gradient of a road surface in a width direction of the traffic lane. The magnitude of the gradient is, for example, a value obtained by dividing a difference in height between a left end and a right end of the traffic lane in the width direction of the traffic lane by a length of the width of the traffic lane.

The acquisition unit 101 acquires the traveling condition information including the road condition of the road on which the vehicle 2 travels from map information and/or the detected information of the in-vehicle sensor 30. The acquisition unit 101 identifies the road on which the vehicle 2 is traveling based on location information of the vehicle 2 and the map information stored in the storage device 50, and acquires the traveling condition information including the road condition of the identified road from the map information. For example, the road condition is a road condition in the traveling direction of the vehicle 2 on the road on which the vehicle 2 is traveling. The acquisition unit 101 acquires a vehicle surrounding image in the traveling direction of the vehicle 2 from the in-vehicle sensor 30, executes an image recognition process on the vehicle surrounding image, and thus, acquires the traveling condition information including the road condition of the road on which the vehicle 2 is traveling. Note that in this embodiment, the traveling condition information may be acquired from the map information and the detected information of the in-vehicle sensor 30 in combination, may be acquired from any one piece of information of the map information and the detected information of the in-vehicle sensor 30, or not limited to these, may be acquired from information other than these pieces of information.

The acquisition unit 101 acquires the traveling condition information including the operating condition of the driving assistance device 40 from the driving assistance device 40. The operating condition of the driving assistance device 40 is, namely, an operating condition of the ADAS. The operation of the driving assistance device 40 includes sudden deceleration control of the vehicle 2, for example, collision damage mitigation braking (Autonomous Emergency Braking, AEB). The operation of the driving assistance device 40 includes lane-change control. The operation of the driving assistance device 40 includes parking assist control. The parking assist control includes, for example, rear collision damage mitigation braking (R-AEB). The acquisition unit 101 acquires information on which function is in operation among these functions of the ADAS. In this embodiment, the acquisition unit 101 may acquire both the traveling condition information including the road condition and the traveling condition information including the operating condition, or may acquire any one piece of the information. The traveling condition information acquired by the acquisition unit 101 may be another traveling condition other than the road condition and the operating condition as long as the traveling condition allows for determining whether the condition affects the calibration of the in-vehicle sensor 30 or not.

The determining unit 102 executes a determination process of determining whether the traveling condition of the vehicle 2 is a condition where the in-vehicle sensor 30 executes the calibration or not and a condition that affects the calibration of the in-vehicle sensor 30 or not based on the traveling condition information. The determination process is executed at a constant cycle when the vehicle 2 is traveling while executing the lane keeping control.

Here, an embodiment of the determination process will be described. For example, in the determination process, the determining unit 102 determines whether the traveling condition of the vehicle 2 is the condition where the in-vehicle sensor 30 executes the calibration or not based on the traveling condition information including the operating condition of the in-vehicle sensor 30. The determining unit 102 determines that the traveling condition of the vehicle 2 is the condition where the in-vehicle sensor 30 executes the calibration when the acquisition unit 101 acquires the traveling condition information including the operating condition indicating that the in-vehicle sensor 30 executes the calibration from the in-vehicle sensor 30. In the determination process, a determination of whether the traveling condition of the vehicle 2 is the condition that affects the calibration of the in-vehicle sensor 30 or not is executed. In the determination process, the determining unit 102 determines whether the road condition is the condition that affects the calibration of the in-vehicle sensor 30 or not based on the traveling condition information including the road condition of the road on which the vehicle 2 travels. The road condition that affects the calibration of the in-vehicle sensor 30 is, for example, a case where the road is a curved road. That is, the determining unit 102 determines whether the vehicle 2 travels on the curved road or not based on the traveling condition information including the road condition. The road condition that affects the calibration of the in-vehicle sensor 30 is not limited to the case where the road is the curved road, but may be a case where the road is a rough road, a road with speed bumps, or an undulating road. The determining unit 102 determines that the traveling condition of the vehicle 2 is the condition that affects the calibration of the in-vehicle sensor 30 when the road on which the vehicle 2 travels is any one of these roads.

The determining unit 102 determines that the road condition is the condition that affects the calibration of the in-vehicle sensor 30 when the road on which the vehicle 2 travels has a gradient that changes. The gradient of the road is, for example, a longitudinal gradient. For example, the determining unit 102 determines that the road condition is the road condition that affects the calibration of the in-vehicle sensor 30 when the longitudinal gradient of the road on which the vehicle 2 travels changes. The case where the longitudinal gradient changes is a case where the road on which the vehicle 2 travels becomes an ascending slope or a descending slope. The gradient of the road may be a transverse gradient. For example, the determining unit 102 determines that the road condition is the road condition that affects the calibration of the in-vehicle sensor 30 when the transverse gradient of the road on which the vehicle 2 travels changes.

The determining unit 102 may determine that the road condition is the condition that affects the calibration of the in-vehicle sensor 30 when there are diverging and merging points in the traveling direction of the road on which the vehicle 2 travels. For example, the determining unit 102 determines that the road condition is the condition that affects the calibration of the in-vehicle sensor 30 when the vehicle 2 needs to change the traffic lane toward the diverging and merging points located in the traveling direction. Note that in this embodiment, the determining unit 102 determines that the road condition is not the condition that affects the calibration of the in-vehicle sensor 30 when the road condition of the road on which the vehicle 2 travels is a road condition other than the above-described road conditions.

In the determination process, the determining unit 102 determines whether the operating condition of the driving assistance device 40 is the condition that affects the calibration of the in-vehicle sensor 30 or not based on the traveling condition information including the operating condition of the driving assistance device 40. For example, the determining unit 102 determines that the operating condition of the driving assistance device 40 is the condition that affects the calibration of the in-vehicle sensor 30 when the driving assistance device 40 is performing the sudden deceleration control or performing the parking assist control. Note that in this embodiment, the determining unit 102 determines that the operating condition of the driving assistance device 40 is not the condition that affects the calibration of the in-vehicle sensor 30 when the driving assistance device 40 is not performing the above-described controls.

As described above, the determining unit 102 performs the determination of whether the traveling condition of the vehicle 2 is the condition where the in-vehicle sensor 30 executes the calibration or not, and the determination of whether the traveling condition of the vehicle 2 is the condition that affects the calibration of the in-vehicle sensor 30 or not, and thus, determines whether the traveling condition of the vehicle 2 is the condition where the in-vehicle sensor 30 executes the calibration or not and whether the traveling condition of the vehicle 2 is the condition that affects the calibration of the in-vehicle sensor 30 or not. Note that in this embodiment, whether the determination process is performed based on the road condition or the determination process is performed based on the operating condition may be appropriately applied as necessary, and not limited to this, as long as the traveling condition is the condition that affects the calibration of the in-vehicle sensor 30, the determination process may be performed based on another condition without limiting the condition to the road condition or the operating condition.

The control unit 103 executes a control process that controls the attitude of the traveling vehicle 2. In the control process, the control unit 103 suppresses the change in the attitude of the vehicle 2 when the determining unit 102 determines that the traveling condition of the vehicle 2 is the condition where the in-vehicle sensor 30 executes the calibration and the condition that affects the calibration of the in-vehicle sensor 30. The control process of suppressing the change in the attitude of the vehicle 2 is executed while the vehicle 2 is executing the lane keeping control. For example, the control unit 103 suppresses the change in the attitude of the vehicle 2 by the suspension. The change in the attitude of the vehicle 2 by the suspension is adjustment of the vehicle height of the vehicle 2 by the suspension. As an example of a method of suppressing the adjustment of the vehicle height, for example, the control unit 103 prohibits the adjustment of the vehicle height by the suspension. While in this embodiment, the adjustment of the vehicle height is enabled based on the determination by the driver or the vehicle attitude control device 10 in normal operation, when the traveling condition of the vehicle 2 is determined to be the condition where the in-vehicle sensor 30 executes the calibration and the condition that affects the calibration of the in-vehicle sensor 30, the adjustment of the vehicle height based on the determination by the driver or the vehicle attitude control device 10 is prohibited.

The control unit 103 prohibits a change in the vehicle height of the vehicle 2 in an prohibited section when the driver inputs an execution command to execute the vehicle height adjustment of the vehicle 2 into the input device 20 while the vehicle 2 is traveling in the prohibited section. The control unit 103 adjusts the vehicle height of the vehicle 2 based on the execution command after the vehicle 2 has passed through the prohibited section. The prohibited section is a section including a curved road. For example, the prohibited section is a section combining a section of the curved road and a section from an entrance of the curved road to a location at a predetermined distance upstream of the vehicle 2 in the traveling direction. The predetermined distance is, for example, a distance that the vehicle 2 travels during a period from the start of the vehicle height adjustment until the completion of the vehicle height adjustment; for example, it is a distance obtained by integrating the vehicle speed of the vehicle 2 over the time required for the vehicle height adjustment.

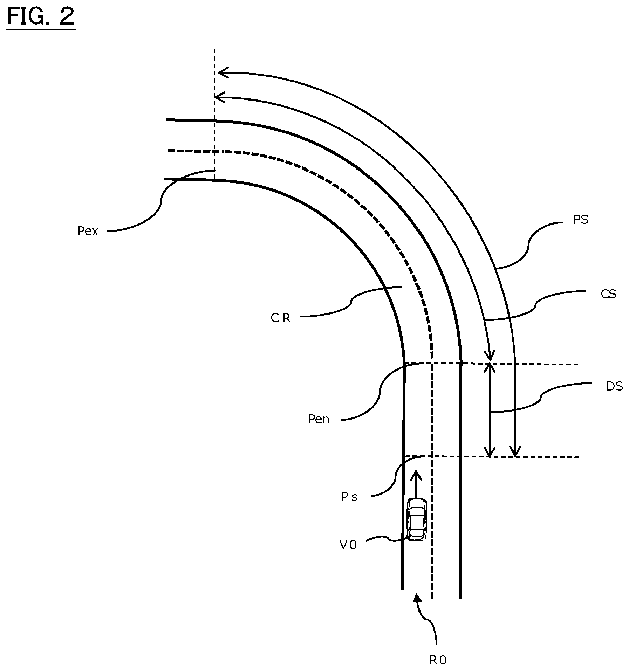

Here, as one embodiment of the present invention, a situation where the vehicle 2 includes the vehicle attitude adjustment mechanism 60 including the suspension and enters the curved road when traveling while executing the lane keeping control will be described. FIG. 2 is a drawing describing an exemplary embodiment of a vehicle attitude control method according to the embodiment. FIG. 2 illustrates a situation where a vehicle enters a curved road when the vehicle is traveling while executing the lane keeping control. In FIG. 2, the roads before and after a curved road CR of a road R0 on which a vehicle V0 travels are straight. The vehicle attitude control device 10 acquires traveling condition information including an operating condition of the in-vehicle sensor 30 of the vehicle V0 and a road condition of the road R0 on which the vehicle V0 travels when the vehicle V0 is traveling on the road R0 while executing the lane keeping control. Specifically, the traveling condition information includes a road condition in a traveling direction of the vehicle V0 on the road R0. The vehicle attitude control device 10 determines whether the traveling condition of the vehicle V0 is the condition where the in-vehicle sensor 30 executes the calibration or not and the condition where the vehicle V0 travels on the curved road or not based on the acquired traveling condition information. The vehicle attitude control device 10 determines that the traveling condition of the vehicle V0 is the condition where the in-vehicle sensor 30 executes the calibration when the traveling information including the operating condition indicating that the in-vehicle sensor 30 executes the calibration is acquired from the in-vehicle sensor 30. As illustrated in FIG. 2, the road R0 is a road including the curved road CR. That is, FIG. 2 illustrates the vehicle V0 in the condition of entering the curved road CR. Accordingly, the vehicle attitude control device 10 determines that the traveling condition of the vehicle V0 is the condition where the vehicle V0 travels on the curved road RC.

The vehicle attitude control device 10 suppresses a change in the attitude of the vehicle V0 by the suspension when the traveling condition of the vehicle V0 is determined to be the condition where the in-vehicle sensor 30 executes the calibration and the condition where the vehicle V0 travels on the curved road RC. Here, the vehicle attitude control device 10 prohibits the vehicle height adjustment of the vehicle V0 by the suspension. This allows suppressing a decrease in the accuracy of the calibration of the in-vehicle sensor 30 due to the vehicle height change of the vehicle V0 when the vehicle V0 travels on the curved road CR.

One specific example of a method of suppressing a change in the attitude of a vehicle traveling on a curved road will be described in the example in FIG. 2. Here, the vehicle attitude control device 10 prohibits the vehicle height adjustment in the prohibited section including the curved road, and executes the vehicle height adjustment after the vehicle V0 has passed through the prohibited section. As illustrated in FIG. 2, a prohibited section PS on the road R0 is a section including the curved road CR. The prohibited section PS may also further include a set section DS before the curved road. That is, the prohibited section PS is a section combining the set section DS and a curve section CS. The set section DS is a section on a straight road before the curved road, and is a section from a curved road entrance Pen to a point Ps at a predetermined distance upstream of the vehicle 2 in the traveling direction. That is, the prohibited section PS is a section from the point Ps to a curved road exit Pex.

The vehicle attitude control device 10 does not execute the vehicle height adjustment even though the driver gives an execution command of the vehicle height adjustment while the vehicle V0 is traveling in the prohibited section PS. The vehicle attitude control device 10 executes the vehicle height adjustment based on the execution command by the driver when the vehicle V0 has passed through the prohibited section PS. Note that the embodiment described in the example in FIG. 2 is one embodiment of the present invention, and therefore, the present invention is not limited to this.

In this embodiment, the control unit 103 notifies the driver of notification information including a state of the vehicle height of the vehicle 2 via the output device 70 when the vehicle height of the vehicle 2 is adjusted. The notification information including the state of the vehicle height of the vehicle 2 is, for example, information including the completion of the vehicle height adjustment of the vehicle 2. The state of the vehicle height of the vehicle 2 includes information on the vehicle height after the vehicle height adjustment and the like. For example, after the vehicle 2 has passed through the prohibited section, when the control unit 103 adjusts the vehicle height of the vehicle 2 by the suspension, the control unit 103 notifies the driver of notification information including a state of the adjusted vehicle height at the timing.

The control unit 103 displays notification information including a currently set vehicle height mode via the output device 70 when the vehicle height of the vehicle 2 is adjusted by the suspension in accordance with a set vehicle height mode. For example, when the vehicle height mode is switched, the control unit 103 displays notification information including the switched vehicle height mode. The vehicle height mode will be described later.

The method of suppressing the change in the attitude of the vehicle 2 by the suspension is not limited to prohibiting the vehicle height adjustment by the suspension, and another method may be used. For example, the control unit 103 may adjust the vehicle height of the vehicle 2 by the suspension in phases until obtaining a target vehicle height. The control unit 103 may alternately control the suspension on a front wheel side and the suspension on a rear wheel side to alternately adjust the vehicle height on the front wheel side and the vehicle height on the rear wheel side until obtaining the target vehicle height. When the traveling condition is determined to be the condition where the in-vehicle sensor 30 executes the calibration and the condition that affects the calibration of the in-vehicle sensor 30, the control unit 103 may decrease a change rate of the vehicle height of the vehicle 2 compared with a case where the traveling condition is not determined to be the condition where the in-vehicle sensor 30 executes the calibration and the condition that affects the calibration of the in-vehicle sensor 30 and adjust the vehicle height of the vehicle 2 by the suspension.

The method of suppressing the change in the attitude of the vehicle 2 may be a method using the vehicle attitude adjustment mechanism 60 other than the suspension. For example, when the traveling condition is determined to be the condition where the in-vehicle sensor 30 executes the calibration and the condition that affects the calibration of the in-vehicle sensor 30, the control unit 103 adjusts a damping force of a variable damping mechanism, rigidity of a variable stabilizer, and/or an damping characteristic of vehicle behavior control of the vehicle 2 to be high compared with a case where the traveling condition is not determined to be the condition where the in-vehicle sensor 30 executes the calibration and the condition that affects the calibration of the in-vehicle sensor 30. The control unit 103 may increase the damping force of the variable damping mechanism in order to suppress pitching of the vehicle 2, and thus, may suppress the change in the attitude of the vehicle 2 when the traveling condition of the vehicle 2 is the condition where the pitching of the vehicle 2 occurs, such as the case where the vehicle 2 travels on a rough road, a road with speed bumps, or an undulating road or the case where the road on which the vehicle 2 travels becomes a descending slope or an ascending slope.

The control unit 103 may suppress the change in the attitude of the vehicle 2 by increasing the damping force of the variable damping mechanism or the rigidity of the variable stabilizer in order to suppress rolling of the vehicle 2 when the traveling condition of the vehicle 2 is a condition where the rolling of the vehicle 2 occurs, such as the case where the gradient of the road changes, the case where the vehicle 2 travels on a curved road, the case where a sudden steering operation is made, or the case where there are diverging and merging points in the traveling direction on the road.

The control unit 103 may suppress the change in the attitude of the vehicle 2 by adjusting the damping characteristic of the vehicle behavior control (body motion control) to be high. In the vehicle behavior control, each element of the vehicle behavior, such as roll, pitch, yaw, a vertical translational motion, and a lateral translational motion of the vehicle 2, is controlled. For example, when the traveling condition of the vehicle 2 is the condition where the pitching and/or the rolling of the vehicle 2 occurs as described above, the control unit 103 controls each element of the vehicle behavior by adjusting the damping characteristic to be high so as to suppress the pitching and/or the rolling of the vehicle 2. Note that in this embodiment, for the mechanism and the method of suppressing the change in the attitude of the vehicle 2, the above-described method is allowed to be appropriately configured, and at least any one of the mechanism and the method may be used, the mechanism and the method may be used in combination, or all the mechanism and the method may be used.

The input device 20 is a device into which various kinds of information are input by the driver. The input device 20 may be, for example, a switch that allows an input by a manual operation by the driver, a touch panel arranged on a display screen, or a microphone that allows an input by a voice of the driver. In this embodiment, the input device 20 receives an execution command to execute the vehicle height adjustment of the vehicle 2 by the suspension.

The in-vehicle sensor 30 detects vehicle surrounding information including the traveling condition around the vehicle 2. The vehicle surrounding information includes, for example, the traveling condition in the traveling direction of the vehicle 2. The traveling condition is, for example, the road condition of the road on which the vehicle 2 travels. The road condition includes, for example, a curved road, a rough road, a road with speed bumps, and/or an undulating road. The in-vehicle sensor 30 may use, for example, a camera that is disposed outside of the vehicle and includes an image sensor, such as a CCD or a CMOS. The in-vehicle sensor 30 acquires the vehicle surrounding image taking an image of the traveling condition around the vehicle 2 using the camera. The detected information of the in-vehicle sensor 30 is output to the vehicle attitude control device 10 and the driving assistance device 40. The in-vehicle sensor 30 executes the calibration while the vehicle 2 is traveling. The expression while the vehicle 2 is traveling includes, for example, when the vehicle 2 is traveling while executing the lane keeping control. In the calibration, the in-vehicle sensor 30 calibrates a relative position and attitude of the in-vehicle sensor 30. The in-vehicle sensor 30 outputs the traveling condition information including the operating condition indicating that the calibration is executed to the vehicle attitude control device 10 when the calibration is executed.

The driving assistance device 40 is a device that assists driving of the vehicle 2. The driving assistance device 40 is a component included in an advanced driver assistance system (ADAS). The driving assistance device 40 assists the driving by the driver by operating automatic braking control, auto cruise control, lane keeping control, parking assist control, or the like of the vehicle 2. The automatic braking control includes sudden deceleration control, such as collision damage mitigation braking. The driving assistance device 40 outputs the operating condition information including the operating condition to the vehicle attitude control device 10. The operating condition includes control contents operated by the driving assistance device 40.

The storage device 50 is a storage medium that stores various kinds of information. The storage device 50 stores map information. The map information is three-dimensional high-precision map information based on a road shape detected when a data collection vehicle travels on actual roads. The map information includes road information of each road. The road information includes the types of roads. The types of roads include a curved road, a rough road, a road with speed bumps, and an undulating road. The road information includes road shape information, such as a magnitude (for example, a curvature or a curvature radius) of a curve of the road and a gradient of the road. The gradient of the road may be a longitudinal gradient or may be a transverse gradient. The map information is map information with which detailed and highly-accurate location information of a merging point of roads, a diverging point, a toll booth, a location of decreased traffic lanes, service areas and parking areas, and the like is associated as three-dimensional information.

The vehicle attitude adjustment mechanism 60 is a mechanism that adjusts the attitude of the vehicle 2. The attitude of the vehicle 2 is a vehicle height and an inclination of the vehicle 2. The vehicle height of the vehicle 2 is a position of an upper end of a roof of the vehicle 2 in an up-down direction (a vertical direction). The inclination of the vehicle 2 includes an inclination of the vehicle 2 in a front-rear direction (a pitch angle). The vehicle attitude adjustment mechanism 60 adjusts the attitude of the vehicle 2 so as to suppress pitching. The inclination includes an inclination of the vehicle 2 in a right-left direction (a roll angle). The vehicle attitude adjustment mechanism 60 adjusts the attitude of the vehicle 2 so as to suppress rolling.

For example, the vehicle attitude adjustment mechanism 60 includes suspensions installed between a vehicle body and axles of the vehicle 2. The suspension may be an air suspension or may be an electronically controlled suspension. In this embodiment, the suspension includes two vehicle attitude adjustment functions. One is a function of suppressing the change in the attitude (for example, the inclination) of the vehicle 2 that occurs while the vehicle 2 travels. The other one is a function of adjusting the vehicle height based on a determination by the driver or the vehicle attitude control device 10.

In the function of adjusting the vehicle height, the suspension changes the vehicle height of the vehicle 2 in accordance with the vehicle height mode. The vehicle height mode has a first vehicle height mode that changes the vehicle height of the vehicle 2 to a predetermined vehicle height and a second vehicle height mode that changes the vehicle height of the vehicle 2 to a vehicle height lower than the predetermined vehicle height. The first vehicle height mode is, for example, a rough road traveling mode. The second vehicle height mode is, for example, a sports car mode.

Setting of the vehicle height mode is changed by the driver or the vehicle attitude control device 10. For example, when the driver inputs an execution command to change the vehicle height mode into the input device 20, the vehicle attitude control device 10 changes the vehicle height mode in accordance with the execution command of the driver. The vehicle attitude control device 10 changes the vehicle height mode in accordance with the vehicle speed of the vehicle 2. The vehicle attitude control device 10 changes the vehicle height mode in accordance with whether the vehicle speed of the vehicle 2 is equal to or more than a predetermined vehicle speed or not. The predetermined vehicle speed may be one value or may be a plurality of values. For example, the vehicle attitude control device 10 changes the vehicle height mode to the second vehicle height mode when the vehicle speed of the vehicle 2 is equal to or more than a predetermined first vehicle speed (for example, 90 km/h). The vehicle attitude control device 10 changes the vehicle height mode to the first vehicle height mode when the vehicle speed of the vehicle 2 is equal to or less than a predetermined second vehicle speed (for example, 70 km/h).

In the function of adjusting the vehicle height, the suspension may change the vehicle height of the vehicle 2 in phases. The suspension adjusts the vehicle height of the vehicle 2 in phases until obtaining a target vehicle height. The vehicle height on the front wheel side and the vehicle height on the rear wheel side may be alternately adjusted until obtaining the target vehicle height by alternately operating the suspension on the front wheel side and the suspension on the rear wheel side. The suspension may change the change rate of the vehicle height and adjust the vehicle height at the change rate after the change. When the traveling condition is determined to be the condition where the in-vehicle sensor 30 executes the calibration and the condition where the vehicle 2 travels on the curved road, the suspension decreases the change rate of the vehicle height of the vehicle 2 compared with a case where the traveling condition is not determined to be the condition where the in-vehicle sensor 30 executes the calibration and the condition where the vehicle 2 travels on the curved road and changes the vehicle height of the vehicle 2.

The vehicle attitude adjustment mechanism 60 may include an adjustment mechanism other than the suspension. The vehicle attitude adjustment mechanism 60 may include a variable stabilizer or may include a variable damping mechanism, such as a damper. The variable stabilizer is a stabilizer capable of changing the rigidity. The variable damping mechanism, such as a damper, is an attenuation mechanism capable of changing a damping force for suppressing the vibration of a spring. These vehicle attitude adjustment mechanisms 60 may be collectively controlled or may be individually and independently controlled.

The output device 70 is a device for outputting information and providing the information to the driver. The output device 70 may be a device mounted on the vehicle, or may be a device mounted in a portable mobile terminal, such as a mobile phone or a tablet terminal, used by the driver. The output device 70 is a device that displays image information, and is configured of a liquid crystal display, a projector, or the like. For example, the display is a meter panel or a head-up display. The output device 70 may be a device that outputs audio information. For example, the output device 70 is configured of a speaker.

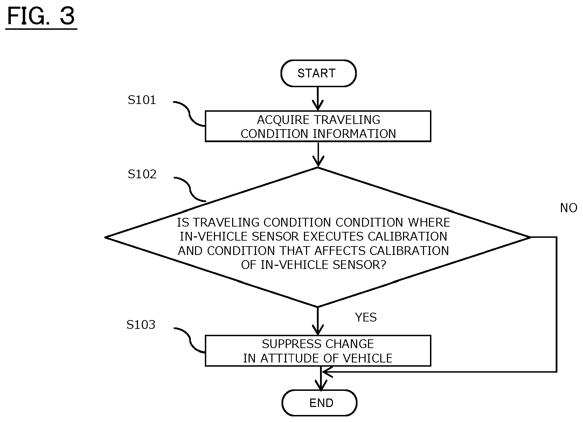

Next, using FIG. 3, one example illustrating a procedure for executing the vehicle attitude control method according to the embodiment will be described. FIG. 3 is a drawing illustrating an example of a flowchart of control processing of the vehicle attitude control method executed by the vehicle attitude control device 10. In this embodiment, when the vehicle 2 is traveling while executing the lane keeping control, a control flow starts from Step S101.

At Step S101, the vehicle attitude control device 10 acquires the traveling condition information including the traveling condition of the vehicle 2. For example, the traveling condition information includes the operating condition of the in-vehicle sensor 30 and the road condition of the road on which the vehicle 2 travels. At Step S102, the vehicle attitude control device 10 determines whether the traveling condition is the condition where the in-vehicle sensor 30 executes the calibration or not and the condition that affects the calibration of the in-vehicle sensor 30 or not based on the traveling condition information. For example, the vehicle attitude control device 10 determines whether the traveling condition is the condition where the in-vehicle sensor 30 executes the calibration or not and the condition where the vehicle 2 travels on the curved road or not. When the traveling condition is determined to be the condition where the in-vehicle sensor 30 executes the calibration and the condition that affects the calibration of the in-vehicle sensor 30, the vehicle attitude control device 10 proceeds to Step S103. At Step S103, the vehicle attitude control device 10 suppresses the change in the attitude of the vehicle 2. For example, the vehicle attitude control device 10 prohibits the adjustment of the vehicle height of the vehicle 2. When the traveling condition is determined not to be the condition that affects the calibration of the in-vehicle sensor 30, the vehicle attitude control device 10 terminates the control flow.

The vehicle attitude control device 10 repeatedly executes the control flow in FIG. 3 at a constant cycle when the vehicle 2 is traveling while executing the lane keeping control. Note that in the example in FIG. 3, the vehicle attitude control device 10 is set to a state of permitting the change in the attitude of the vehicle 2 by the vehicle attitude adjustment mechanism 60 while the vehicle 2 is traveling. Therefore, as long as the change in the attitude of the vehicle 2 is not suppressed at Step S103, the vehicle attitude control device 10 controls the attitude of the vehicle 2 to be changeable. Accordingly, at Step S102, when the condition is determined not to be the condition that affects the calibration of the in-vehicle sensor 30, the vehicle attitude control device 10 maintains the state of permitting the change in the attitude of the vehicle 2. At this time, for example, when the execution command to adjust the vehicle height of the vehicle 2 is given by the driver, the vehicle attitude control device 10 adjusts the vehicle height of the vehicle 2.

As described above, the vehicle attitude control method and the vehicle attitude control device according to the embodiment are the method and the device that control the attitude of the vehicle by the vehicle attitude adjustment mechanism capable of changing the attitude of the traveling vehicle, determine whether the traveling condition is the condition where the in-vehicle sensor executes the calibration or not and the condition that affects the calibration of the in-vehicle sensor or not based on the traveling condition information including the traveling condition of the vehicle when the vehicle is traveling while executing the lane keeping control based on the detected information of the in-vehicle sensor, and suppress the change in the attitude of the vehicle when the traveling condition is determined to be the condition where the in-vehicle sensor executes the calibration and the condition that affects the calibration. This allows for appropriate execution of the lane keeping control in a situation where the in-vehicle sensor executes the calibration while the vehicle is traveling in the traveling condition that affects the calibration of the in-vehicle sensor when the vehicle including the vehicle attitude adjustment mechanism capable of changing the attitude of the traveling vehicle travels while executing the lane keeping control based on the detected information of the in-vehicle sensor.

In this embodiment, the vehicle attitude adjustment mechanism includes the suspension that adjusts the attitude of the vehicle, and the vehicle attitude control method and the vehicle attitude control device determine whether the traveling condition is the condition where the in-vehicle sensor executes the calibration or not based on the traveling condition information including the operating condition of the in-vehicle sensor, determine whether the traveling condition is the condition where the vehicle travels on the curved road or not based on the traveling condition information including the road condition of the road on which the vehicle travels, and when the traveling condition is determined to be the condition where the in-vehicle sensor executes the calibration and the condition where the vehicle travels on the curved road, suppress the change in the attitude of the vehicle by the suspension. This allows for appropriate execution of the lane keeping control in a situation where the vehicle that executes the lane keeping control based on the detected information of the in-vehicle sensor travels on the curved road.

In this embodiment, the input device disposed in the vehicle receives the execution command to execute the vehicle height adjustment of the vehicle by the suspension, and, and when the execution command is input into the input device by the driver while the vehicle is traveling in the prohibited section including the curved road, the vehicle attitude control method and the vehicle attitude control device prohibit the vehicle height adjustment of the vehicle in the prohibited section, and adjust the vehicle height of the vehicle based on the execution command after the vehicle has passed through the prohibited section. This allows for adjusting the vehicle height of the vehicle as the driver commands while appropriately executing the lane keeping control of the vehicle.

The vehicle attitude control method and the vehicle attitude control device according to the embodiment notify the driver of the notification information including the state of the vehicle height of the vehicle when the vehicle height of the vehicle is adjusted. This allows the driver to confirm the vehicle height of the vehicle.

In this embodiment, the suspension adjusts the vehicle height of the vehicle in accordance with the vehicle height mode, the vehicle height mode is set to the first vehicle height mode that changes the vehicle height of the vehicle to the predetermined vehicle height or to the second vehicle height mode that changes the vehicle height of the vehicle to the vehicle height lower than the predetermined vehicle height, and the vehicle attitude control method and the vehicle attitude control device display the notification information including the currently set vehicle height mode on the output device mounted inside the vehicle. This allows the driver to confirm to which vehicle height mode the currently set vehicle height mode is set.

When the traveling condition is determined to be the condition where the in-vehicle sensor executes the calibration and the condition where the vehicle travels on the curved road, the vehicle attitude control method and the vehicle attitude control device according to the embodiment adjust the vehicle height of the vehicle in phases by the suspension, or decrease the change rate of the vehicle height of the vehicle compared with a case where the traveling condition is not determined to be the condition where the in-vehicle sensor executes the calibration and the condition where the vehicle travels on the curved road and adjust the vehicle height of the vehicle by the suspension. This allows for suppressing the change in the vehicle height of the vehicle.

The vehicle attitude control method and the vehicle attitude control device according to the embodiment acquire the traveling condition information including the road condition of the road on which the vehicle travels from the map information and/or the detected information of the in-vehicle sensor. This allows for determining whether the traveling condition is the condition that affects the calibration of the in-vehicle sensor or not based on the road condition of the road on which the vehicle travels.

The vehicle attitude control method and the vehicle attitude control device according to the embodiment acquires the traveling condition information including the operating condition of the driving assistance device from the driving assistance device that assists the driving of the vehicle. This allows for determining whether the traveling condition is the condition that affects the calibration of the in-vehicle sensor or not based on the operating condition of the driving assistance device.

When the traveling condition is determined to be the condition where the in-vehicle sensor executes the calibration and the condition that affects the calibration, the vehicle attitude control method and the vehicle attitude control device according to the embodiment adjust the damping force of the variable damping mechanism included in the vehicle, the rigidity of the variable stabilizer included in the vehicle, and/or the damping characteristic of the vehicle behavior control of the vehicle to be high compared with a case where the traveling condition is not determined to be the condition where the in-vehicle sensor executes the calibration and the condition that affects the calibration, and thus, suppress the change in the attitude of the vehicle. This maintains the attitude of the vehicle even in the traveling condition that affects the calibration of the in-vehicle sensor, thus allowing an increase in the accuracy of the calibration of the in-vehicle sensor.

Note that the embodiment described above is described for ease of understanding the present invention, and is not described to limit the present invention. Accordingly, each component disclosed in the above-described embodiment has the gist of encompassing all the changes of design and equivalents falling within the technical scope of the present invention.

### Description of Reference Numerals

- 2: vehicle
- 10: vehicle attitude control device

- 100: control device
- 101: acquisition unit
- 102: determining unit
- 103: control unit
- 20: input device
- 30: in-vehicle sensor
- 40: driving assistance device
- 50: storage device
- 60: vehicle attitude adjustment mechanism
- 70: output device

## Claims

1. A vehicle attitude control method executed by a vehicle attitude control device that controls an attitude of a vehicle using a vehicle attitude adjustment mechanism capable of changing the attitude of the traveling vehicle, wherein
the vehicle attitude control device:
when the vehicle is traveling while executing lane keeping control based on detected information of an in-vehicle sensor, determines whether a traveling condition is a condition where the in-vehicle sensor executes calibration or not and a condition that affects the calibration of the in-vehicle sensor or not based on traveling condition information including the traveling condition of the vehicle; and
when the traveling condition is determined to be the condition where the in-vehicle sensor executes the calibration and the condition that affects the calibration, suppresses a change in the attitude of the vehicle.

2. The vehicle attitude control method according to claim 1, wherein
the vehicle attitude adjustment mechanism includes a suspension that adjusts the attitude of the vehicle, and
the vehicle attitude control device:
determines whether the traveling condition is the condition where the in-vehicle sensor executes the calibration or not based on the traveling condition information including an operating condition of the in-vehicle sensor;
determines whether the traveling condition is a condition where the vehicle travels on a curved road or not based on the traveling condition information including a road condition of a road on which the vehicle travels; and
when the traveling condition is determined to be the condition where the in-vehicle sensor executes the calibration and the condition where the vehicle travels on the curved road, suppresses a change in the attitude of the vehicle by the suspension.

3. The vehicle attitude control method according to claim 2, wherein
an input device disposed in the vehicle receives an execution command to execute vehicle height adjustment of the vehicle by the suspension, and
the vehicle attitude control device, when the execution command is input into the input device by a driver while the vehicle is traveling in a prohibited section including the curved road, prohibits the vehicle height adjustment of the vehicle in the prohibited section, and adjusts vehicle height of the vehicle based on the execution command after the vehicle has passed through the prohibited section.

4. The vehicle attitude control method according to claim 3, wherein
the vehicle attitude control device notifies the driver of notification information including a state of the vehicle height of the vehicle when the vehicle height of the vehicle is adjusted.

5. The vehicle attitude control method according to claim 3 or 4, wherein
the suspension adjusts the vehicle height of the vehicle in accordance with a vehicle height mode,
the vehicle height mode is set to a first vehicle height mode that changes the vehicle height of the vehicle to a predetermined vehicle height or to a second vehicle height mode that changes the vehicle height of the vehicle to a vehicle height lower than the predetermined vehicle height, and
the vehicle attitude control device displays the notification information including the currently set vehicle height mode on an output device mounted inside the vehicle.

6. The vehicle attitude control method according to claim 2, wherein
the vehicle attitude control device, when the traveling condition is determined to be the condition where the in-vehicle sensor executes the calibration and the condition where the vehicle travels on the curved road, adjusts the vehicle height of the vehicle in phases by the suspension, or decreases a change rate of the vehicle height of the vehicle compared with a case where the traveling condition is not determined to be the condition where the in-vehicle sensor executes the calibration and the condition where the vehicle travels on the curved road and adjusts the vehicle height of the vehicle by the suspension.

7. The vehicle attitude control method according to any one of claims 1 to 6, wherein
the vehicle attitude control device acquires the traveling condition information including a road condition of a road on which the vehicle travels from map information and/or the detected information of the in-vehicle sensor.

8. The vehicle attitude control method according to any one of claims 1 to 7, wherein
the vehicle attitude control device acquires the traveling condition information including an operating condition of a driving assistance device from the driving assistance device that assists driving of the vehicle.

9. The vehicle attitude control method according to claim 1, wherein
the vehicle attitude control device, when the traveling condition is determined to be the condition where the in-vehicle sensor executes the calibration and the condition that affects the calibration, adjusts a damping force of a variable damping mechanism included in the vehicle, rigidity of a variable stabilizer included in the vehicle, and/or an damping characteristic of vehicle behavior control of the vehicle to be high compared with a case where the traveling condition is not determined to be the condition where the in-vehicle sensor executes the calibration and the condition that affects the calibration to suppress the change in the attitude of the vehicle.

10. A vehicle attitude control device that controls an attitude of a vehicle by a vehicle attitude adjustment mechanism capable of changing the attitude of the traveling vehicle, the vehicle attitude control device comprising:
a determining unit that, when the vehicle is traveling while executing lane keeping control based on detected information of an in-vehicle sensor, determines whether a traveling condition is a condition where the in-vehicle sensor executes calibration or not and a condition that affects the calibration of the in-vehicle sensor or not based on traveling condition information including the traveling condition of the vehicle; and
a control unit that, when the traveling condition is determined to be the condition where the in-vehicle sensor executes the calibration and the condition that affects the calibration, suppresses a change in the attitude of the vehicle.
